# EUROPEAN PATENT APPLICATION

(11) **EP 4 790 907 A1**
(43) Date of publication of application: **12.08.2026**
(21) Application number: 24876438.3
(22) Date of filing: 29.09.2024
(51) Int. Cl.: H04B 1/38

(54) **WIRELESS COMMUNICATION APPARATUS, BATTERY MODULE, BATTERY PACK, AND VEHICLE**

(30) Priority: 08.10.2023 CN 202322710164 U
(71) Applicant: BYD Company Limited, Shenzhen, Guangdong 518118 (CN)
(72) Inventor: CAI, Chen, Shenzhen, Guangdong 518118 (CN); LIU, Dongdong, Shenzhen, Guangdong 518118 (CN); LIU, Zhao, Shenzhen, Guangdong 518118 (CN); ZENG, Wei, Shenzhen, Guangdong 518118 (CN); ZHUANG, Hua, Shenzhen, Guangdong 518118 (CN)
(74) Representative: Mathys & Squire
(86) International application number: PCT/CN2024/122291
(87) International publication number: WO 2025/077622

(57) **Abstract**

Provided is a vehicle, including a battery pack, where the battery pack includes a battery module, and the battery module includes a wireless communication apparatus. The wireless communication apparatus includes a transmitter and an antenna. The antenna communicates with the transmitter, and a distance between the antenna and the transmitter is L, and L satisfies: $0 \leq L \leq 100 mm .$

## Description

### CROSS-REFERENCE TO RELATED APPLICATIONS

This application claims priority to Chinese Patent Application No. 202322710164.0, filed with the China National Intellectual Property Administration on October 08, 2023, and entitled "WIRELESS COMMUNICATION APPARATUS, BATTERY MODULE, BATTERY PACK, AND VEHICLE", which is incorporated herein by reference in its entirety.

### TECHNICAL FIELD

This application relates to the field of vehicle technologies, and in particular, to a wireless communication apparatus, a battery module, a battery pack, and a vehicle.

### BACKGROUND

In the related art, battery packs for most electric vehicles use wired communication to transmit data from battery modules to the controller of a battery management system (BMS). Specifically, a sampling circuit board is welded to an inter-battery cell connecting sheet via a nickel sheet for voltage sampling. Adjacent sampling circuit boards between different modules are connected via wiring harnesses and connectors for daisy-chain communication to transmit sampling information. That is, a daisy chain starts from a main negative terminal of a BMU, forms a loop between the sampling circuit boards of the modules, and returns to a main positive terminal of the BMU. The foregoing solution results in numerous wiring harnesses and connectors inside the battery pack, leading to structural redundancy.

### SUMMARY

This application is intended to resolve at least one of technical problems existing in the prior art. In view of this, a first objective of this application is to provide a wireless communication apparatus, so that an antenna can be disposed adjacent to a transmitter, improving the stability and timeliness of signal transmission.

A second objective of this application is to provide a battery module, including the foregoing wireless communication apparatus.

A third objective of this application is to provide a battery pack, including the foregoing battery module.

A fourth objective of this application is to provide another battery pack, including the foregoing battery module.

A fifth objective of this application is to provide a vehicle, including the foregoing battery pack.

According to an embodiment in a first aspect of this application, the wireless communication apparatus includes: a transmitter and an antenna, wherein the antenna communicates with the transmitter, a distance between the antenna and the transmitter is L, and L satisfies: 0≤L≤100 mm.

According to the wireless communication apparatus in the embodiment of this application, the distance between the antenna and the transmitter is defined to enable the antenna to be stably disposed within the range of electromagnetic wave signals emitted by the transmitter, so that the antenna can acquire and form differential signals for transmission in a timely and accurate way.

In some embodiments, the antenna includes a plurality of differential signal lines, and the plurality of differential signal lines communicate wirelessly with the transmitter.

In some embodiments, the antenna includes: at least one shielding wire, wherein the shielding wire and the plurality of the differential signal lines are disposed side by side.

In some embodiments, there are a plurality of shielding wires, and the plurality of shielding wires are separately located on two sides of an arrangement direction of the plurality of differential signal lines.

In some embodiments, an outer side of the antenna is wrapped with a cable.

In some embodiments, the wireless communication apparatus further includes a receiver, wherein the transmitter communicates with the receiver via the antenna.

According to an embodiment in a second aspect of this application, the battery module includes at least one battery cell and a wireless communication apparatus, wherein the wireless communication apparatus is the wireless communication apparatus according to any one of the foregoing embodiments, and the wireless communication apparatus is electrically connected to the battery cell.

In some embodiments, the battery module further includes a sensor, wherein the sensor is disposed inside the battery module, and the sensor is electrically connected to a transmitter of the wireless communication apparatus.

In some embodiments, the battery module includes a module housing, wherein the battery cell is disposed inside the module housing. The wireless communication apparatus is disposed inside the battery cell; or the wireless communication apparatus is disposed outside the battery cell, and the wireless communication apparatus is located inside the module housing; or the wireless communication apparatus is disposed outside the module housing.

In some embodiments, an antenna of the wireless communication apparatus is disposed on one side of the module housing away from the battery cell.

According to an embodiment in a third aspect of this application, the battery pack includes a housing, at least one battery cell, a wireless communication apparatus, and a sensor. The battery cell is disposed inside the housing. The wireless communication apparatus is the wireless communication apparatus according to any one of the foregoing embodiments, and one end of the wireless communication apparatus is electrically connected to the battery cell. The sensor is disposed inside the housing, and the sensor is electrically connected to a transmitter of the wireless communication apparatus.

In some embodiments, the battery pack further includes an antenna, wherein the antenna communicates with the transmitter disposed inside the wireless communication apparatus. The housing includes a tray and a cover plate. One side of the tray is open, the cover plate is disposed on the open side of the tray, the cover plate and the tray jointly define an accommodating cavity, the battery cell is disposed in the accommodating cavity, and the antenna is disposed on the tray or the cover plate.

In some embodiments, at least one of the cover plate and the tray includes a first housing layer and a second housing layer, and the first housing layer is located on one side of the second housing layer away from the battery cell. The antenna is disposed between the first housing layer and the second housing layer; or the antenna is disposed on one side of the first housing layer away from the second housing layer; or the antenna is disposed on one side of the second housing layer away from the first housing layer.

In some embodiments, the battery pack further includes a control apparatus, wherein the control apparatus is disposed inside the housing. The control apparatus is electrically connected to a receiver of the wireless communication apparatus, and the antenna communicates with the control apparatus via the receiver.

According to an embodiment in a fourth aspect of this application, the battery pack includes: at least one battery module and a control apparatus. The battery module is the battery module according to any one of the foregoing embodiments, and a wireless communication apparatus is disposed inside the battery module. The wireless communication apparatus includes a transmitter, an antenna, and a receiver. The sensor of the battery module is electrically connected to the transmitter, the transmitter communicates with the receiver via the antenna; and the receiver is electrically connected to the control apparatus.

According to an embodiment in a fifth aspect of this application, the vehicle includes the battery pack according to any one of the foregoing embodiments.

Additional aspects and advantages of this application are partially given in the following description, partially become apparent from the following description, or are learned from the practice of this application.

### BRIEF DESCRIPTION OF DRAWINGS

The foregoing and/or additional aspects and advantages of this application become apparent and easily understandable from the description of embodiments with reference to the following accompanying drawings, in which:
FIG. 1 is a schematic diagram of a battery pack (with a cover plate) according to an embodiment of this application.
FIG. 2 is a schematic diagram of a battery pack (without a cover plate) according to an embodiment of this application.
FIG. 3 is a schematic diagram of positions of a battery cell and a wireless communication apparatus according to an embodiment of this application.
FIG. 4 is a sectional view of an antenna according to an embodiment of this application.
FIG. 5 is a schematic diagram with a battery module according to an embodiment of this application.
FIG. 6 is a three-dimensional schematic diagram without a battery module according to an embodiment of this application.
FIG. 7 is a top view without a battery module according to an embodiment of this application.
FIG. 8 is a schematic diagram of a wireless communication apparatus disposed on each battery cell according to an embodiment of this application.
FIG. 9 is a schematic diagram of an acquisition circuit board as a flexible printed circuit board according to an embodiment of this application.
FIG. 10 is a schematic diagram of an antenna disposed on a cover plate according to an embodiment of this application.
FIG. 11 is an enlarged view of area P in FIG. 10.
FIG. 12 is a schematic block diagram of a wireless communication apparatus according to an embodiment of this application.
FIG. 13 is a schematic block diagram of a battery module according to an embodiment of this application.
FIG. 14 is a schematic block diagram of a vehicle according to an embodiment of this application.

Reference numerals:
100: battery pack;
10: housing; 11: cover plate; 111: accommodating groove; 12: tray; 13: accommodating cavity; 1111: first housing layer; 1112: second housing layer;
20: battery cell;
30: wireless communication apparatus; 31: transmitter; 32: receiver; 33: sensor;
40: battery module; 41: module housing; 42: battery cell connecting sheet; 43: sampling nickel sheet;
50: antenna; 51: shielding wire; 52: differential signal line;
60: control apparatus.

### DESCRIPTION OF EMBODIMENTS

Embodiments of this application are described in detail below. The embodiments described with reference to accompanying drawings are exemplary.

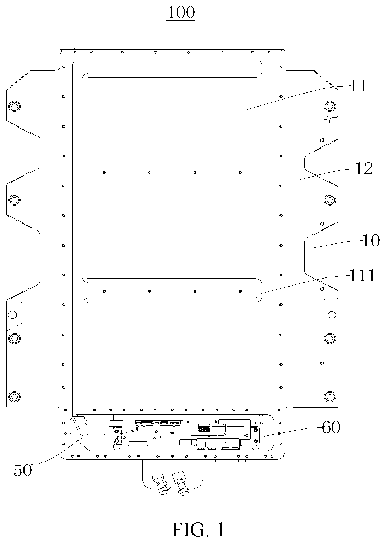

A wireless communication apparatus 30 according to an embodiment of this application is described below with reference to FIG. 1 to FIG. 14, including a transmitter 31 and an antenna 50.

Specifically, as shown in FIG. 1 to FIG. 9, the antenna 50 communicates with the transmitter 31, a distance between the antenna 50 and the transmitter 31 is L, and L satisfies: 0≤L≤100 mm. For example, L=10 mm. If the distance between the antenna 50 and the transmitter 31 is relatively far, the capability of the antenna 50 to receive signals transmitted by the transmitter 31 is affected.

In this embodiment, taking the wireless communication apparatus 30 applied to a battery pack 100 to acquire data from a battery cell 20 as an example, the antenna 50 is configured to receive signals emitted by the transmitter 31. At least a portion of the antenna 50 is disposed within a stable transmission area of differential signals emitted by the transmitter 31. For example, electromagnetic waves emitted by the transmitter 31 propagate within a specific range. The antenna 50 configured to receive electromagnetic wave signals from the transmitter 31 needs to be disposed within the range of electromagnetic wave propagation. A high-frequency current is generated in the antenna 50, and the antenna 50 converts the electromagnetic waves transmitted by the transmitter 31 into the differential signals for transmission. A BMU (Battery Management Unit) acquires, analyzes, and processes data of the battery cell 20. The antenna 50 is a wireless communication apparatus and can convert the electromagnetic waves into electrical signals. The antenna 50 can receive the electromagnetic wave signals transmitted by the transmitter 31.

According to the wireless communication apparatus 30 in the embodiment of this application, the distance between the antenna 50 and the transmitter 31 is defined to enable the antenna 50 to be stably disposed within the range of the electromagnetic wave signals emitted by the transmitter 31, so that the antenna 50 can acquire and form the differential signals for transmission in a timely and accurate way.

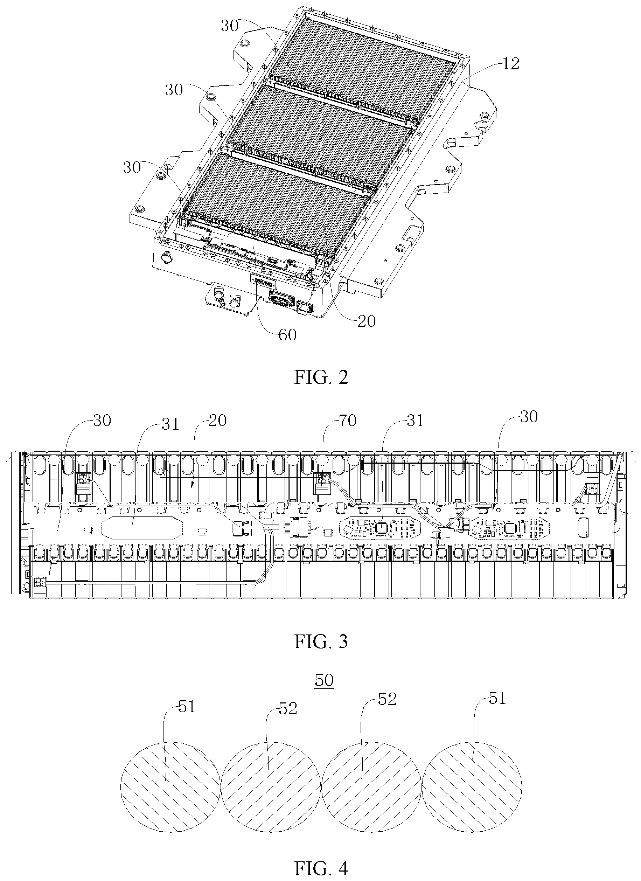

With reference to FIG. 4, the antenna 50 includes a plurality of differential signal lines 52, and the plurality of differential signal lines 52 communicate wirelessly with the transmitter 31. The plurality of differential signal lines 52 can acquire the electromagnetic waves emitted by the transmitter 31 and form corresponding differential signals. One end of the differential signal line 52 away from the transmitter 31 can be electrically connected to the battery management unit for analysis and processing of the data acquired from the battery cell 20, and new signals can be formed to make corresponding adjustments.

With reference to FIG. 4, the antenna 50 further includes at least one shielding wire 51, and the shielding wire 51 and the plurality of the differential signal lines 52 are disposed side by side. Arrangement of the shielding wire 51 can reduce interference of an interfering magnetic field around the antenna 50 on the electromagnetic waves received by the antenna 50 from the transmitter, improving the accuracy of the antenna 50 in acquiring signals. If there is no electromagnetic interference in an environment where the battery pack 100 is used, only the differential signal lines 52 are needed to meet transmission of sampling information.

In some embodiments, there are a plurality of shielding wires 51, and the plurality of shielding wires 51 are separately located on two sides of an arrangement direction of the plurality of differential signal lines 52. In this embodiment, there can be two shielding wires 51. The two shielding wires 51 are disposed on the sides of the two side-by-side differential signal lines 52 that are away from each other. The plurality of shielding wires 51 can shield interference signals from a plurality of directions, ensuring that the antenna 50 stably receives the signals emitted by the transmitter and that the differential signals inside the antenna 50 are stably transmitted.

In some embodiments, an outer side of the antenna 50 is wrapped with a cable. When the antenna 50 is mounted, cables at two ends of the antenna 50 need to be stripped, so that the electromagnetic wave signals emitted by the transmitter can be received conveniently and converted into the differential signals for transmission to the battery management unit. The cable is a conductor cable, the conductor cable includes a microstrip or a coplanar waveguide, and the formed impedance of the antenna 50 matches with the impedance of the conductor cable.

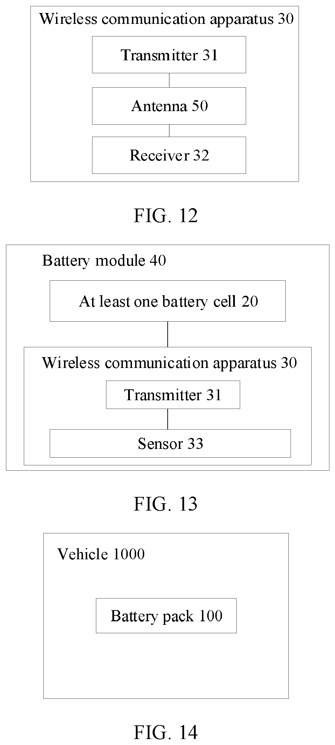

In some embodiments, as shown in FIG. 12, the wireless communication apparatus 30 further includes a receiver 32, and the transmitter 31 communicates with the receiver 32 via the antenna 50. For example, the transmitter 31 can be disposed on the battery cell 20 or adjacent to the battery cell 20, and the receiver 32 can be disposed inside the battery management unit. The transmitter 31 communicates with the antenna 50. Within a radiation range of the transmitter 31, signal transmission between the transmitter 31 and the antenna 50 can ignore a physical finite distance, achieving the signal transmission in space. Therefore, there is no specific limitation on the position of the antenna 50. The antenna 50 is electrically connected to the receiver 32. The antenna 50 converts the electromagnetic waves transmitted by the transmitter 31 into differential signals and transmits same to the receiver 32. The battery management unit is electrically connected to the receiver 32 to analyze and process the signals transmitted by the receiver 32.

In this way, the wireless communication apparatus 30 includes the receiver 32 to enable the wireless communication apparatus 30 to have complete transmission and reception capabilities, ensuring stable signal transmission between the transmitter 31 and the receiver 32, and facilitating arrangement of the wireless communication apparatus 30 inside the battery pack 100.

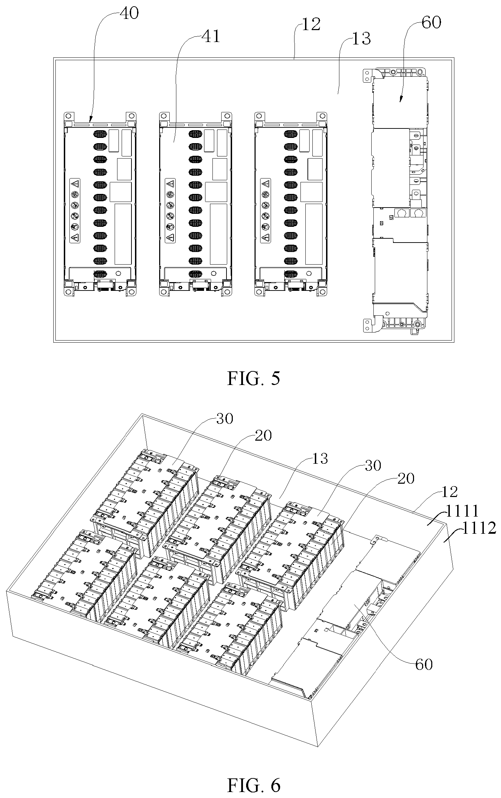

According to an embodiment in a second aspect of this application, the battery module 40, as shown in FIG. 5 to FIG. 7, includes at least one battery cell 20 and a wireless communication apparatus 30. The wireless communication apparatus 30 is the wireless communication apparatus 30 according to any one of the foregoing embodiments, and the wireless communication apparatus 30 is electrically connected to the battery cell 20.

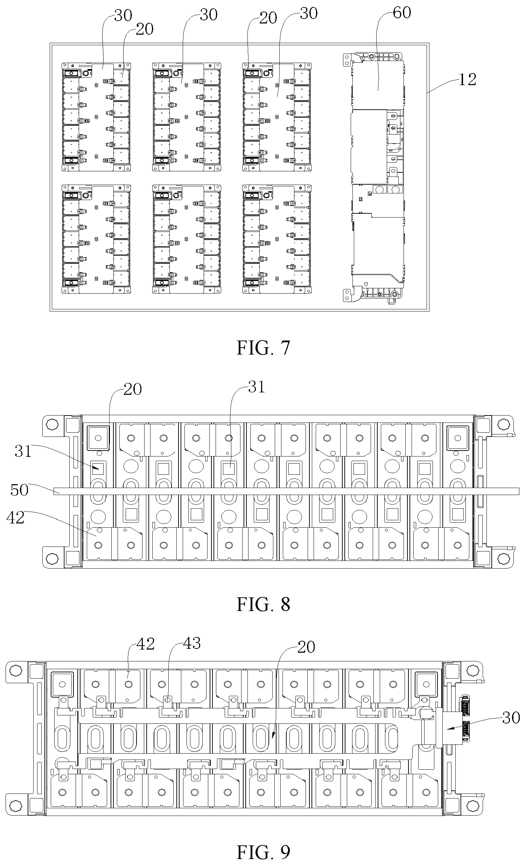

With reference to FIG. 8 and FIG. 9, the wireless communication apparatus 30 is disposed on the battery module 40. The wireless communication apparatus 30 can be disposed inside the battery module 40 or outside the battery module 40. The wireless communication apparatus 30 is electrically connected to the battery cell 20 and is configured to acquire data from the battery cell 20 and transmit the data of the battery cell 20 to the battery management unit or an external device for analysis and processing, so as to maintain the working safety and stability of the battery cell 20. There can be a plurality of battery cells 20, and the wireless communication apparatus 30 can correspond to the plurality of battery cells 20 or simultaneously acquire data from the plurality of battery cells 20. The battery cell 20 and the wireless communication apparatus 30 can also be in one-to-one correspondence.

For example, the battery cell 20 includes a battery cell housing. When the battery cell housing is energized, the wireless communication apparatus 30 is disposed on the battery cell housing to acquire data such as voltage from the battery cell 20. Alternatively, when the battery cell housing is not energized, a battery cell connecting sheet 42 is disposed on the battery cell 20, so that the wireless communication apparatus 30 can achieve electrical connection to the battery cell 20. The wireless communication apparatus 30 is disposed between two adjacent battery cells 20, and is disposed adjacent to negative electrodes of the battery cells 20.

The battery module 40 further includes a sampling nickel sheet 43, and the sampling nickel sheet 43 is disposed between the battery cell connecting sheet 42 and the wireless communication apparatus 30. That is, the wireless communication apparatus 30 is disposed between two terminals of the battery cells 20. The battery cell connecting sheet 42 and the sampling nickel sheet 43 are disposed between the wireless communication apparatus 30 and the terminal. The battery cell connecting sheet 42 is configured to connect the sampling nickel sheet 43 and the terminal of the battery cell 20, the sampling nickel sheet 43 is configured to connect the wireless communication apparatus 30 and the battery cell connecting sheet 42, and the sampling nickel sheet 43 is configured to sample the voltage of the battery cell 20. The sampling nickel sheet 43 is welded to the battery cell connecting sheet 42 and a transmitter 31 of the wireless communication apparatus 30. In this way, arrangement of the sampling nickel sheet 43 facilitates electrical connection between the battery cell connecting sheet 42 and the wireless communication apparatus 30, and facilitates sampling of data such as voltage from the battery cell 20.

In some embodiments, as shown in FIG. 13, the battery module 40 further includes a sensor 33, the sensor 33 is disposed inside the battery module 40, and the sensor 33 is electrically connected to the transmitter 31 of the wireless communication apparatus 30.

In addition, in the related art, a radio frequency chip is embedded inside each module and a controller of the BMS to facilitate communication connection and data transmission between each module and the BMS. However, in this embodiment, the sensor 33, the transmitter 31, and an acquisition circuit board can be integrated into an acquisition circuit board element. The sensor 33 and the transmitter 31 are both disposed on the acquisition circuit board. The acquisition circuit board supplies power to the sensor 33 and the transmitter 31. The sensor 33 is electrically connected to the battery cell 20 to acquire data from the battery cell 20 and form signals to be transmitted to the transmitter 31. The transmitter 31 transmits the signals to the antenna 50 and finally to a receiver 32 electrically connected to the battery management unit. The sensor 33 can acquire data information such as temperature and voltage of the battery cell 20.

Optionally, the sensor 33 and the transmitter 31 can be integrated as an acquisition element. The sensor 33 and the transmitter 31 can share a circuit board inside the sensor 33 or a circuit board inside the transmitter 31. The acquisition element is electrically connected to the battery cell 20 and communicates with the antenna 50.

In this embodiment, optionally, the wireless communication apparatus 30 is disposed inside the battery pack 100. The sensor 33 is disposed on the wireless communication apparatus 30. The sensor 33 is configured to acquire the data information of the battery cell 20 disposed inside the battery pack 100. The acquired data information is sent out by the sensor 33. The transmitter 31 transmits the acquired data information to the receiver 32. The receiver 32 can be disposed on the BMU (Battery Management Unit) of a power distribution box or on the BMS including the BMU.

According to the wireless communication apparatus 30 in the embodiment of this application, optionally, the sensor 33, the transmitter 31 and the antenna 50 are disposed inside the wireless communication apparatus 30, the sensor 33 is electrically connected to the battery cell 20, and the transmitter 31 is electrically connected to the sensor 33, so that wireless communication between the transmitter 31 and the receiver 32 can be achieved. In this way, the use of wiring harnesses inside the battery pack 100 provided with the wireless communication apparatus 30 can be reduced, and the space inside the battery pack 100 is optimized, so that a communication structure inside the battery pack 100 is simpler; and the space occupied by the wireless communication apparatus 30 inside the battery pack 100 is reduced, so that the available space inside the battery pack 100 is larger and more battery cells 20 can be arranged, increasing the battery capacity of the battery pack 100.

As shown in FIG. 8 and with reference to FIG. 13, the sensor 33 and the transmitter 31 are integrated into the acquisition element. The transmitter 31 is disposed on the sensor 33, and the transmitter 31 is electrically connected to the sensor 33. In this case, the sensor 33 acquires data from the battery cell 20 in one aspect, and serves as a circuit board to be electrically connected to the transmitter 31 in another aspect, so that the sensor 33 transmits the acquired data to the transmitter 31.

Optionally, the sensor 33, the acquisition circuit board, and the transmitter 31 are integrated into an acquisition circuit board element, and each battery cell 20 can correspond to one acquisition circuit board element. In this case, both the sensor 33 and the transmitter 31 are disposed on the acquisition circuit board and on a same side of the acquisition circuit board in a thickness direction. One side of the acquisition circuit board away from the transmitter 31 is opposite to the battery cell 20.

Optionally, the acquisition circuit board is a flexible printed circuit board or a rigid printed circuit board. The flexible printed circuit board or the rigid printed circuit board is selected on the basis of the form of the battery module 40 inside the battery pack 100.

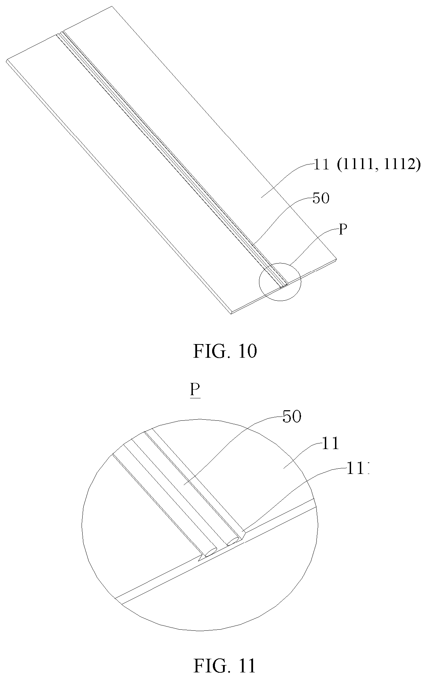

In some embodiments, as shown in FIG. 1 and FIG. 10 and with reference to FIG. 13, the battery module 40 includes a module housing 41, the battery cell 20 is disposed inside the module housing 41, and the wireless communication apparatus 30 is disposed inside the battery cell 20. That is, the sensor 33 included in the wireless communication apparatus 30 is placed inside the battery cell housing of the battery cell 20, and thereby acquires data from the battery cell 20.

Optionally, the wireless communication apparatus 30 is disposed outside the battery cell 20, and the wireless communication apparatus 30 is located inside the module housing 41. In this case, the wireless communication apparatus 30 can be disposed on the battery cell housing and is connected to the battery cell housing, or the wireless communication apparatus 30 is disposed on an inner side wall of the module housing 41 and is opposite to the battery cell 20. Alternatively, a mounting bracket is disposed between the battery cell housing and the module housing 41, and the wireless communication apparatus 30 is mounted on the battery cell 20 or the module housing 41 via the mounting bracket.

Optionally, the wireless communication apparatus 30 is disposed outside the module housing 41. For example, the wireless communication apparatus 30 is disposed outside the module housing 41, and is fastened outside the module housing 41 via a clip, a fastener, or the like to achieve fastening and mounting.

Specifically, as shown in FIG. 1, the wireless communication apparatus 30 includes the antenna 50, and the antenna 50 is disposed outside the battery module 40 or inside the battery module 40.

In some embodiments, as shown in FIG. 5 to FIG. 7, the antenna 50 is disposed on the acquisition circuit board, and in this case, the antenna 50 is fastened to the acquisition circuit board. In this way, the antenna 50 is closer to the acquisition circuit board to better acquire the signals emitted by the transmitter 31. The acquisition circuit board is a rigid printed circuit board.

In some embodiments, the antenna 50 of the wireless communication apparatus 30 is disposed on one side of the module housing 41 away from the battery cell 20, thereby facilitating the arrangement of the wireless communication apparatus 30 and improving the mounting efficiency of the antenna 50.

In this embodiment, a groove, a clip, or an adhesive can be disposed on an exterior of the module housing 41. The antenna 50 can be detachably fitted into the groove to achieve mounting of the antenna 50. The wireless communication apparatus 30 is disposed inside the module housing 41 and is electrically connected to the battery cell 20. The signals emitted by the transmitter 31 are converted by the antenna 50 into differential signals for transmission to the receiver 32. The signals are analyzed and processed by the BMU to achieve control over the battery cell 20.

In this way, when the antenna 50 is disposed on the battery module 40, the antenna 50 can be disposed inside or outside the module housing 41 of the battery module 40, both achieving signal transmission between the antenna 50 and the transmitter 31. A specific position where the antenna 50 is disposed can be selected on the basis of a usage scenario.

According to an embodiment in a third aspect of this application, the battery pack 100 includes: a housing 10, at least one battery cell 20, a wireless communication apparatus 30, and a sensor 33. The battery cell 20 is disposed inside the housing 10. The wireless communication apparatus 30 is the wireless communication apparatus 30 according to any one of the foregoing embodiments. One end of the wireless communication apparatus 30 is electrically connected to the battery cell 20. The sensor 33 is disposed inside the housing 10, and the sensor 33 is electrically connected to a transmitter 31 of the wireless communication apparatus 30.

In this embodiment, the battery cell 20 is disposed inside the housing 10. The wireless communication apparatus 30 includes the transmitter 31 and an antenna 50. The transmitter 31 is electrically connected to the sensor 33. The sensor 33 acquires data from the battery cell 20 and transmits signals to the transmitter 31. The transmitter 31 communicates with the antenna 50. The antenna 50 is electrically connected to a receiver 32. The wireless communication apparatus 30 can be disposed on the battery cell 20 and is electrically connected to the battery cell 20.

In some embodiments, there are a plurality of battery cells 20, and the plurality of battery cells 20 are electrically connected to at least one wireless communication apparatus 30. That is, there are a plurality of battery cells 20 inside the battery module 40, a wireless communication apparatus 30 is disposed on each battery cell 20, and each wireless communication apparatus 30 is electrically connected to a corresponding battery cell 20. In this way, each battery cell 20 corresponds to one wireless communication apparatus 30, so that the sensor 33 can accurately identify data of the corresponding battery cell 20 and transmit same to the transmitter 31, and the signals acquired thereby can be transmitted to the BMU via the antenna 50 and receiver 32.

Furthermore, for the acquisition element formed by integrating the sensor 33 and the transmitter 31, the transmitter 31 is integrated onto the sensor 33, and the wireless communication apparatus 30 is directly electrically connected to the battery cell 20 or electrically connected to the battery cell 20 via the battery cell connecting sheet 42 to achieve acquisition of data from the battery cell 20.

In some embodiments, there are a plurality of battery cells 20, and the plurality of battery cells 20 are electrically connected to at least one acquisition circuit board. For example, a battery cell module includes a plurality of battery cells 20 therein, at least some of the plurality of battery cells 20 correspond to one acquisition circuit board, and the acquisition circuit board is electrically connected to the plurality of battery cells 20. In this way, one acquisition circuit board corresponds to the plurality of battery cells 20, facilitating arrangement of the acquisition circuit board on the battery cells 20, reducing the costs of the battery module 40, and facilitating simultaneous acquisition of data from the plurality of battery cells 20 by an acquisition chip to improve the acquisition efficiency.

As shown in FIG. 9, when the plurality of battery cells 20 are disposed in the form of modules inside the battery pack 100, each battery module 40 corresponds to at least one acquisition circuit board. In this case, the acquisition circuit board may be an FPC (Flexible Printed Circuit: flexible printed circuit board) or a BIC (Battery Information Collector: rigid printed circuit board). The sensor 33 and the transmitter 31 can be integrated onto the acquisition circuit board. The antenna 50 passes sequentially through the module housings 41 of a plurality of battery modules 40, and the antenna 50 is fastened by bonding or clipping. The method for mounting and fastening the antenna 50 and the structure thereof are simple and convenient, facilitating arrangement of the antenna 50 and improving the mounting efficiency of the battery pack 100.

In some embodiments, the battery pack 100 further includes the antenna 50, and the antenna 50 communicates with the transmitter 31 disposed inside the wireless communication apparatus 30. The housing 10 includes a tray 12 and a cover plate 11. One side of the tray 12 is open, and the cover plate 11 is disposed on one side of the tray 12. The cover plate 11 and the tray 12 jointly define an accommodating cavity 13. The battery cell 20 is disposed inside the accommodating cavity 13, and the antenna 50 is disposed on the tray 12 or the cover plate 11.

The plurality of battery cells 20 are arranged inside the accommodating cavity. When the terminals of the battery cells 20 are disposed toward the cover plate 11, the acquisition circuit board 31 included by the wireless communication apparatus 30 is disposed between the terminals of the battery cells 20, and the antenna 50 can be disposed on the cover plate 11 to reduce the distance between the antenna 50 and the transmitter included by the wireless communication apparatus 30, so that the antenna 50 can better receive the signals transmitted by the transmitter. When the terminals of the battery cells 20 are disposed toward one side of the tray 12, the acquisition circuit board 31 included by the wireless communication apparatus 30 is disposed between the terminals of the battery cells 20, and the antenna 50 can be disposed on the tray 12. For example, a groove is formed in one side of the tray 12 adjacent to the battery cells 20, and the antenna 50 can be fitted into the groove, reducing the space occupied by the antenna 50 inside the accommodating cavity and facilitating mounting and fastening of the antenna 50. Alternatively, the antenna 50 is directly disposed on a side surface of the tray 12 adjacent to the battery cell 20, and is connected by clipping, bonding, or the like.

In this way, when the battery cells 20 are disposed inside the accommodating cavity, the position of the antenna 50 can be selected on the basis of the positions where the terminals of the battery cells 20 are disposed, so that the antenna 50 and the transmitter can be kept within a proper range, facilitating communication between the antenna 50 and the transmitter. Therefore, the data acquired from the battery cells 20 by the sensor 33 can be transmitted to the antenna 50 in a timely and efficient way, and then transmitted to the BMS via the antenna 50 to achieve reading and analysis of the data of the battery cells 20, thereby achieving adjustment of an interior of the battery pack 100.

As shown in FIG. 6 and FIG. 7, when the plurality of battery cells 20 are disposed inside the battery pack 100, but are not in the form of modules, the antenna 50 can be fastened to the acquisition circuit board 31 or to the cover plate 11 of the battery pack 100. The acquisition circuit board 31 is a BIC circuit board. In this case, one end of the terminals of the plurality of battery cells 20 is disposed toward the cover plate 11. The acquisition circuit board 31 is disposed between the battery cells 20 and the cover plate 11. The acquisition circuit board 31 is electrically connected to the terminals. The antenna 50 passes sequentially through the plurality of acquisition circuit boards 31, and acquires data from the battery cells 20 via the transmitter disposed on each acquisition circuit board 31.

With reference to FIG. 2, in this embodiment, when the plurality of battery cells 20 are disposed inside the battery pack 100 and arranged inside the battery pack 100, the plurality of battery cells 20 include at least one battery cell group; the battery cell group includes a plurality of battery cells 20; the battery cell group corresponds to at least one acquisition circuit board 31; and the acquisition circuit board 31 may be a BIC (Battery Information Collector: rigid printed circuit board). Alternatively, the plurality of battery cells 20 include a plurality of battery cell groups, the plurality of battery cell groups are arranged inside the battery pack 100, and each battery cell group corresponds to at least one acquisition circuit board 31. The acquisition circuit board 31 is disposed at one end of the battery cell 20 where the terminal is disposed, and the end is electrically connected to the acquisition circuit board 31. The sensor 33 and the transmitter are integrated onto the acquisition circuit board 31. Both the sensor 33 and the transmitter are electrically connected to the acquisition circuit board 31. The sensor 33 can acquire data from the plurality of corresponding battery cells 20. The acquisition chip may be an AFE chip (Analog Front End: battery sampling chip). The sensor 33 can acquire data from the plurality of battery cells 20 and process the data to form signals for the transmitter to transmit. The receiver 32 receives the signals emitted by the transmitter and transmits the signals to a control apparatus 60.

Optionally, at least one of the cover plate 11 and the tray 12 includes a first housing layer and a second housing layer, the first housing layer is located on one side of the second housing layer away from the battery cell 20, and the antenna 50 is disposed between the first housing layer and the second housing layer. For example, the cover plate 11 includes a first housing layer and a second housing layer, and the antenna 50 is disposed between the first housing layer and the second housing layer, so that the antenna 50 is located inside a sealed housing layer defined by the first housing layer and the second housing layer, thereby avoiding possible corrosion to the antenna 50 under the influence of moisture and other factors on the antenna 50, which may affect the capability of the antenna 50 to receive and transmit signals. The first housing layer and the second housing layer are connected to form the cover plate 11 by gluing or hot pressing.

In some optional embodiments, the antenna 50 is disposed on one side of the first housing layer away from the second housing layer; or the antenna 50 is disposed on one side of the second housing layer away from the first housing layer. That is, the antenna 50 is disposed on one side of the first housing layer away from the second housing layer, or on one side, away from the first housing layer, of the second housing layer. On a surface of the first housing layer or a side surface of the second housing layer, the antenna 50 is disposed on either side of the cover plate 11 in a thickness direction by clipping, bonding, or the like.

In some embodiments, with reference to FIG. 10 and FIG. 11, an accommodating groove 111 for accommodating at least a portion of the antenna 50 is formed in at least one of the first housing layer and the second housing layer. That is, the accommodating groove 111 can be formed in one side of the first housing layer facing the second housing layer, or the accommodating groove 111 can be formed in one side of the second housing layer facing the first housing layer. For example, the cover plate 11 includes a first housing layer 1111 and a second housing layer 1112: the accommodating groove 111 is formed in the first housing layer, and the accommodating groove 111 can be formed by sinking from one side of the first housing layer 1111 close to the second housing layer 1112 to one side away from the second housing layer 1112; or the accommodating groove 111 is formed in the second housing layer 1112, and the accommodating groove 111 can be formed by sinking from one side of the second housing layer 1112 close to the first housing layer 1111 to one side away from the first housing layer 1111. In this way, arrangement of the accommodating groove 111 facilitates the mounting of the antenna 50 between the first housing layer 1111 and the second housing layer 1112, facilitates protection and sealing of the antenna 50, and reduces corrosion caused by environmental factors to the antenna 50.

In some embodiments, the battery pack 100 further includes the control apparatus 60, the control apparatus 60 is disposed inside the housing 10, the control apparatus 60 is electrically connected to the receiver 32 of the wireless communication apparatus 30, and the antenna 50 communicates with the control apparatus 60 via the receiver 32.

In some embodiments, the battery pack 100 further includes the control apparatus 60, the control apparatus 60 is disposed inside the housing 10, the control apparatus 60 includes the receiver 32, and the antenna 50 communicates with the receiver 32. The battery management system includes the control apparatus 60, and the receiver 32 communicates with the control apparatus to transmit signals transmitted by the transmitter to the battery management system, to facilitate the acquisition of data from the battery cell 20 and achievement of the control over the battery cell 20.

In some embodiments, the control apparatus 60 includes a main positive terminal and a main negative terminal, and two ends of the antenna 50 are electrically connected to the main positive terminal and the main negative terminal respectively. For example, the antenna 50 is led out from the main negative terminal of the control apparatus 60, enters the accommodating groove 111 in the cover plate 11 of the battery pack 100, passes sequentially through the acquisition circuit boards 31 corresponding to the plurality of battery cells 20 or the acquisition circuit boards 31 corresponding to the plurality of battery modules 40, and then returns to the main positive terminal of the control apparatus 60. The antenna 50 is opposite to the transmitter disposed on each acquisition circuit board 31. Each transmitter can locally send the data acquired by the sensor 33 from the battery cell 20 to the antenna 50 adjacent thereto.

FIG. 1 is a schematic diagram of a specific routing of the antenna 50 according to this application. However, the scope of protection of this application is not limited to a number of battery cells 20 inside the battery pack 100, a number and the arrangement positions of the acquisition circuit boards 31, and a specific path of the antenna 50 inside the battery pack 100. In this way, the arrangement of the antenna 50 can facilitate the layout and wiring routing thereof in the battery pack 100, with higher flexibility and lower costs.

According to an embodiment in a fourth aspect of this application, the battery pack 100 includes: at least one battery module 40 and a control apparatus 60. The battery module 40 is the battery module 40 according to any one of the foregoing embodiments. A wireless communication apparatus 30 is arranged inside the battery module 40. The wireless communication apparatus 30 includes a transmitter 31, an antenna 50, and a receiver 32. A sensor 33 of the battery module 40 is electrically connected to the transmitter 31. The transmitter 31 communicates with the receiver 32 via the antenna 50. The receiver 32 is electrically connected to the control apparatus 60.

In this embodiment, the battery module 40 is disposed inside the battery pack 100; each battery module 40 includes a plurality of battery cells 20; each battery cell 20 corresponds to one wireless communication apparatus 30, or the plurality of battery cells 20 correspond to one wireless communication apparatus 30, depending on the capabilities of the wireless communication apparatus 30 to acquire and process data of the battery cell 20; and no specific limitation is made herein. Taking the plurality of battery cells 20 corresponding to one wireless communication apparatus 30 as an example, each battery module 40 corresponds to at least one wireless communication apparatus 30; the wireless communication apparatus 30 can be disposed inside or outside a module housing 41 of the battery module 40, and the antenna 50 is connected to the module housing 41 by clipping or bonding. The antenna 50 passes sequentially through a plurality of battery modules 40, and passes through the plurality of battery cells 20, so that the transmitters disposed inside a plurality of wireless communication apparatuses 30 and the antenna 50 can be always kept within a communication range, ensuring the stability of a signal transmission process. The control apparatus 60 can be disposed between the battery module 40 and a side wall of the tray 12 inside the battery pack 100. The control apparatus 60 can acquire data from the battery cell 20 via the antenna 50 and the transmitter and the receiver 32 that communicate with the antenna 50.

The battery management system (BMS) is disposed inside the battery pack 100. The battery management system (BMS) is mainly configured to perform real-time monitoring of parameters such as total voltage, total current, cell voltage, cell temperature, and capacity in the battery pack, fault diagnosis, SOC estimation, driving range estimation, short-circuit protection, leakage monitoring, equalization control, selection of charge and discharge control modes, and the like, and also to interact with a vehicle integrated controller or a motor via a CAN bus to ensure efficient and reliable operation of an electric vehicle. The battery management system includes the control apparatus 60. A working principle is to determine the state and health condition of the battery cell 20 by reading parameters such as voltage, current and temperature of the battery cell 20, and to perform charge and discharge management as needed. Meanwhile, faults and abnormalities of the battery cell 20 can be also detected, and an alarm signal is sent out for timely handling.

According to an embodiment in a fifth aspect of this application, the vehicle 1000, as shown in FIG. 14, includes the battery pack 100 according to any one of the foregoing embodiments.

According to the vehicle 1000 in the embodiment of this application, in the battery pack 100 included by the vehicle 1000, wireless communication connection between a control apparatus 60 and a battery cell 20 is achieved via a wireless communication apparatus 30, so that the control apparatus 60 can detect the battery cell 20 and acquire data from the battery cell 20. In this way, the need for a plurality of wiring harnesses for connection between the control apparatus 60 and the battery cell 20 is reduced, so that the space inside the battery pack 100 is optimized, and arrangement of the battery cell 20 inside the battery pack 100 is facilitated; the density of the battery cells 20 inside a same volume of the battery pack 100 is increased, and the capacity of the battery pack 100 is increased, so that the vehicle has a long driving range; and furthermore, because of the wireless communication between the control apparatus 60 and the battery cell 20, the use of the wiring harnesses is reduced to improve the use safety of the battery pack 100, thereby improving the use safety of the vehicle 1000.

In description of this application, it will be understood that an orientation or a position relationship indicated by the term "center", "longitudinal", "lateral", "length", "width", "thickness", "upper", "lower", "front", "rear", "left", "right", "vertical", "horizontal", "top", "bottom", "inside", "outside", "clockwise", "counterclockwise", "axial", "radial", "circumferential", or the like is an orientation or a position relationship shown in the accompanying drawings, and is merely intended to facilitate the description and simplify the description of this application, but is not intended to indicate or imply that an apparatus or element in question must have a specific orientation and must be constructed and operated in a specific orientation. Therefore, such a term cannot be construed as a limitation on this application.

In the description of this application, a "first feature" or a "second feature" may include one or more such features. In the description of this application, "a plurality of" means two or more. In the description of this application, that the first feature is "above" or "below" the second feature may be that the first feature is in direct contact with the second feature, or may be that the first feature is not in direct contact with the second feature but in contact with the second feature through another feature between the first feature and the second feature. In the description of this application, that the first feature is "above", "over", or "on" the second feature may be that the first feature is right above or obliquely above the second feature, or merely mean that a horizontal height of the first feature is greater than that of the second feature.

In the description of this specification, description of the reference term "one embodiment", "some embodiments", "schematic embodiment", "example", "specific example", "some examples", or the like means that a specific feature, structure, material or characteristic described with reference to the embodiment or example is included in at least one embodiment or example of this application. In this specification, schematic representations of the foregoing terms do not necessarily mean a same embodiment or example.

Although the embodiments of this application have been shown and described, a person of ordinary skill in the art will understand that: various changes, modifications, substitutions, and variations may be made to these embodiments without departing from the principle and spirit of this application. The scope of this application is defined by the claims and their equivalents.

## Claims

1. A wireless communication apparatus (30), comprising:
a transmitter (31); and
an antenna (50), wherein the antenna (50) communicates with the transmitter (31), a distance between the antenna (50) and the transmitter (31) is L, and L satisfies: 0≤L≤100 mm.

2. The wireless communication apparatus (30) according to claim 1, wherein the antenna (50) comprises a plurality of differential signal lines (52), and the plurality of differential signal lines (52) communicate wirelessly with the transmitter (31).

3. The wireless communication apparatus (30) according to claim 2, wherein the antenna (50) further comprises:
at least one shielding wire (51), wherein the shielding wire (51) and the plurality of the differential signal lines (52) are disposed side by side.

4. The wireless communication apparatus (30) according to claim 3, wherein there are a plurality of shielding wires (51), and the plurality of shielding wires (51) are separately located on two sides of an arrangement direction of the plurality of differential signal lines (52).

5. The wireless communication apparatus (30) according to any one of claims 1 to 4, wherein an outer side of the antenna (50) is wrapped with a cable.

6. The wireless communication apparatus (30) according to any one of claims 1 to 5, further comprising:
a receiver (32), wherein the transmitter (31) communicates with the receiver (32) via the antenna (50).

7. A battery module (40), comprising:
at least one battery cell (20); and
a wireless communication apparatus (30), wherein the wireless communication apparatus (30) is the wireless communication apparatus (30) according to any one of claims 1 to 6, and the wireless communication apparatus (30) is electrically connected to the battery cell (20).

8. The battery module (40) according to claim 7, further comprising:
a sensor (33), wherein the sensor (33) is disposed inside the battery module (40), and the sensor (33) is electrically connected to a transmitter (31) of the wireless communication apparatus (30).

9. The battery module (40) according to claim 7, wherein the battery module (40) comprises: a module housing (41), wherein the battery cell (20) is disposed inside the module housing (41); and
the wireless communication apparatus (30) is disposed inside the battery cell (20); or
the wireless communication apparatus (30) is disposed outside the battery cell (20), and the wireless communication apparatus (30) is located inside the module housing (41); or
the wireless communication apparatus (30) is disposed outside the module housing (41).

10. The battery module (40) according to claim 9, wherein an antenna (50) of the wireless communication apparatus (30) is disposed on one side of the module housing (41) away from the battery cell (20).

11. A battery pack (100), comprising:
a housing (10);
at least one battery cell (20), wherein the battery cell (20) is disposed inside the housing (10);
a wireless communication apparatus (30), wherein the wireless communication apparatus (30) is the wireless communication apparatus (30) according to any one of claims 1 to 6, and one end of the wireless communication apparatus (30) is electrically connected to the battery cell (20); and
a sensor (33), wherein the sensor (33) is disposed inside the housing (10), and the sensor (33) is electrically connected to a transmitter (31) of the wireless communication apparatus (30).

12. The battery pack (100) according to claim 11, further comprising: an antenna (50), wherein the antenna (50) communicates with the transmitter (31) disposed inside the wireless communication apparatus (30); and
the housing (10) comprises:
a tray (12), wherein one side of the tray (12) is open; and
a cover plate (11), wherein the cover plate (11) is disposed on the open side of the tray (12), the cover plate (11) and the tray (12) jointly define an accommodating cavity (13), the battery cell (20) is disposed inside the accommodating cavity (13), and the antenna (50) is disposed on the tray (12) or the cover plate (11).

13. The battery pack (100) according to claim 12, wherein at least one of the cover plate (11) and the tray (12) comprises a first housing layer (1111) and a second housing layer (1112), the first housing layer (1111) is located on one side of the second housing layer (1112) away from the battery cell (20), and the antenna (50) is disposed between the first housing layer (1111) and the second housing layer (1112); or
the antenna (50) is disposed on one side of the first housing layer (1111) away from the second housing layer (1112); or
the antenna (50) is disposed on one side of the second housing layer (1112) away from the first housing layer (1111).

14. The battery pack (100) according to claim 12 or 13, further comprising: a control apparatus (60), wherein the control apparatus (60) is disposed inside the housing (10), the control apparatus (60) is electrically connected to a receiver (32) of the wireless communication apparatus (30), and the antenna (50) communicates with the control apparatus (60) via the receiver (32).

15. A battery pack (100), comprising:
at least one battery module (40), wherein the battery module (40) is the battery module (40) according to any one of claims 7 to 10, a wireless communication apparatus (30) is disposed inside the battery module (40), the wireless communication apparatus (30) comprises a transmitter (31), an antenna (50), and a receiver (32), a sensor (33) of the battery module (40) is electrically connected to the transmitter (31), and the transmitter (31) communicates with the receiver (32) via the antenna (50); and
a control apparatus (60), wherein the receiver (32) is electrically connected to the control apparatus (60).

16. A vehicle, comprising the battery pack (100) according to any one of claims 11 to 14 or the battery pack (100) according to claim 15.
